# EUROPEAN PATENT APPLICATION

(11) **EP 4 851 477 A1**
(43) Date of publication of application: **09.12.2026**
(21) Application number: 26182709.1
(22) Date of filing: 02.06.2026
(51) Int. Cl.: F16D 48/06

(54) **VEHICLE**

(30) Priority: 04.06.2025 JP 2025093743
(71) Applicant: Yamaha Hatsudoki Kabushiki Kaisha, Iwata-shi, Shizuoka 438-8501 (JP)
(72) Inventor: MINAMI, Kengo, Iwata-shi, Shizuoka, 438-8501 (JP); OKUZUMI, Shinobu, Iwata-shi, Shizuoka, 438-8501 (JP)
(74) Representative: Stöckeler, Ferdinand

(57) **Abstract**

There is provided a vehicle that can prevent an engine stall due to locking of a drive wheel under a special environment such as a race, while preventing a decrease in an effective period of an engine brake. A control device of a vehicle is configured to: when a state of a clutch is a connection state and a drive wheel brake is not operating, cause a clutch actuator to change the state of the clutch from the connection state toward a disconnection state when a rotation speed of an engine falls below a first speed reference; or when the state of the clutch is the connection state and the drive wheel brake is operating, cause the clutch actuator to change the state of the clutch to a half-connection state that is between the connection state and the disconnection state when the rotation speed of the engine falls below a second speed reference that is higher than the first speed reference used when the drive wheel brake is not operating.

## Description

### Technical Field

The present teaching relates to a vehicle.

### Background Art

Patent Literature 1 (PTL 1), for example, discloses a straddled vehicle including a clutch provided between an engine and a transmission mechanism; and a clutch actuator for driving the clutch. The vehicle includes an engine stall prevention unit that controls the clutch actuator to disconnect the clutch when a condition for rotation speed is satisfied. This prevents an engine stall.

### Citation List

### Patent Literature

PTL 1: Japanese Patent Laid-Open No.2014-035065

### Summary of Invention

### Technical Problem

When a brake device of a vehicle operates under a special environment such as a race, the drive wheel may become locked. For example, as in a handbrake turn in an automobile or a brake turn in a straddled vehicle, there is a method of traveling in which a rear wheel that is the drive wheel is positively locked under a special environment such as a race.

In a vehicle, it may be desired to prevent an engine stall due to locking of a drive wheel under a special environment such as a race, while preventing a decrease in an effective period of an engine brake.

An object of the present teaching is to provide a vehicle that can prevent an engine stall due to locking of a drive wheel under a special environment such as a race, while preventing a decrease in an effective period of an engine brake.

### Solution to the Problem

The present inventors conducted intensive studies on the relationship between an engine brake and a stall in a locked state of a drive wheel, and found that by changing a reference speed serving as a reference for changing the state of a clutch from a connection state toward a disconnection state depending on whether a drive wheel brake is operating or not, it is possible to achieve both an effect of utilizing an engine brake that is an influence of the engine and a conflicting effect of preventing a stall that is an influence on the engine.

More specifically, when a drive wheel brake is not operating, a control device of a vehicle changes the state of a clutch from a connection state when a rotation speed of an engine falls below a first speed reference, and when the drive wheel brake is operating, the control device changes the state of the clutch from the connection state when the rotation speed of the engine falls below a second speed reference that is higher than the first speed reference used when the drive wheel brake is not operating.

Locking of the drive wheel occurs when the drive wheel brake operates while the vehicle is traveling, and the resisting force of the brake exceeds the frictional force between the drive wheel and the road surface. Change of the state of the clutch is performed by displacing the position of the clutch itself and operating a clutch actuator. Thus, during the change of the state of the clutch, the influence of rapid deceleration of the drive wheel due to the locking may be transmitted to the engine, causing the engine to stall. Since the higher second speed reference is used as a condition of the rotation speed at which change of the transmission state of the clutch starts, change of the state of the clutch starts at an early time in a situation where the locking has occurred. Thus, even if a time is required to switch the transmission state of the clutch, the influence of rapid deceleration of the drive wheel due to the locking on the engine is prevented. On the other hand, when the drive wheel brake is not operating, the locking is unlikely to occur. In this case, the transmission state of the clutch is changed from the connection state toward the disconnection state, after the rotation speed of the engine falls below the first speed reference that is lower than the second speed reference used when the drive wheel brake is operating. This can prevent a decrease in an effective period of the engine brake and maintain the effect of the engine brake as an influence of the engine. Therefore, it is possible to prevent an engine stall due to locking of the drive wheel, while preventing a decrease in the effective period of the engine brake in the vehicle.

In order to achieve the above object, according to one aspect of the present teaching, a vehicle includes the following configuration.
(1) A vehicle including:
   an engine that outputs a driving force;
   a drive wheel that rotates by receiving the driving force of the engine;
   a drive wheel brake that brakes the drive wheel;
   a clutch that is provided between the engine and the drive wheel and includes a clutch actuator, the clutch being configured to change a state thereof by driving of the clutch actuator; and
   a control device that controls the engine and the clutch actuator,
   the control device being configured to:
      when the state of the clutch is a connection state and the drive wheel brake is not operating, cause the clutch actuator to change the state of the clutch from the connection state when a rotation speed of the engine falls below a first speed reference; and
      when the state of the clutch is the connection state and the drive wheel brake is operating, cause the clutch actuator to change the state of the clutch from the connection state when the rotation speed of the engine falls below a second speed reference that is higher than the first speed reference used when the drive wheel brake is not operating.

The vehicle of (1) includes an engine, a drive wheel, a drive wheel brake, a clutch, and a control device. The engine outputs a driving force. The drive wheel rotates by receiving the driving force of the engine. The clutch is provided between the engine and the drive wheel and includes a clutch actuator. The clutch is configured to change a state thereof between a connection state and a disconnection state by driving of the clutch actuator. The engine and the clutch actuator are controlled by the control device.

The control device is configured to, when the state of the clutch is the connection state and the drive wheel brake is not operating, cause the clutch actuator to change the state of the clutch from the connection state when the rotation speed of the engine falls below the first speed reference.

The control device is configured to, when the clutch is in the connection state and the drive wheel brake is operating, cause the clutch actuator to change the state of the clutch from the connection state when the rotation speed of the engine falls below the second speed reference. The second speed reference used when the drive wheel brake is operating is higher than the first speed reference used when the drive wheel brake is not operating.

Locking of the drive wheel occurs when the drive wheel brake operates while the vehicle is traveling, and the resisting force of the brake exceeds the frictional force between the drive wheel and the road surface. Change of the state of the clutch is performed by operating the clutch actuator and displacing the position of a clutch plate of the clutch. Therefore, a time is required to change the state of the clutch. Thus, during the change of the state of the clutch, if the influence of rapid deceleration of the drive wheel due to the locking is transmitted to the engine, the engine may stall. According to (1), the higher second speed reference is used as a condition of the rotation speed at which change of the transmission state of the clutch starts, so that change of the state of the clutch starts at an earlier time in a situation where the locking has occurred and the rotation speed of the engine is decreasing. For example, the control device can change the state of the clutch from the connection state when the drive wheel brake is operating regardless of the gear stage of a transmission. Thus, even if a time is required to change the transmission state of the clutch, the influence of rapid deceleration of the drive wheel due to the locking on the engine is prevented. The change of the state of the clutch from the connection state is a change from the connection state toward the disconnection state. The change of the state of the clutch from the connection state includes, for example, a change from the connection state to the disconnection state; and a change from the connection state to a half-connection state between the connection state and the disconnection state. On the other hand, when the drive wheel brake is not operating, the locking does not occur. In this case, the transmission state of the clutch is changed from the connection state, after the rotation speed of the engine falls below the first speed reference that is lower than the second speed reference corresponding to when the drive wheel brake is operating. This can prevent a decrease in the effective period of the engine brake and maintain the effect of the engine brake as an influence from the engine. Therefore, according to (1), it is possible to prevent an engine stall due to locking of the drive wheel, while preventing a decrease in the effective period of the engine brake.

According to one aspect of the present teaching, the vehicle can employ the following configuration.

(2) The vehicle according to (1),
further comprising an anti-lock braking system that switches between execution and non-execution of control to prevent locking of the drive wheel during operation of the drive wheel brake, in response to a switching operation by a driver of the vehicle, wherein
the control device is configured to:
   when the control to prevent locking by the anti-lock braking system is being executed, and when the drive wheel brake is operating, cause the clutch actuator to change the state of the clutch from the connection state when the rotation speed of the engine falls below the first speed reference; or
   when the control to prevent locking by the anti-lock braking system is not being executed, and when the drive wheel brake is operating, cause the clutch actuator to change the state of the clutch from the connection state when the rotation speed of the engine falls below the second speed reference that is higher than the first speed reference used when the drive wheel brake is not operating.

The anti-lock braking system performs the control on the drive wheel brake to prevent locking of the drive wheel. The anti-lock braking system is not specifically limited, and may perform control to prevent locking of a wheel other than the drive wheel in addition to the drive wheel. The anti-lock braking system switches between execution and non-execution of the prevention control, in response to, for example, a switching operation by the driver of the vehicle. When the control to prevent locking by the anti-lock braking system is being executed, locking of the drive wheel is prevented even if the drive wheel brake operates. According to (2), when the control to prevent locking by the anti-lock braking system is being executed, the state of the clutch is prevented from changing between the second speed reference and the first speed reference of the rotation speed of the engine, even if the drive wheel brake is operating. That is, the frequency of unnecessary operations of the clutch is reduced in a situation where the locking is prevented by the anti-lock braking system. This can reduce power consumption by the operation of the clutch actuator and wear of the clutch.

According to one aspect of the present teaching, the vehicle can employ the following configuration.

(3) The vehicle according to (1) or (2),
further comprising a required driving force command unit that commands a required driving force required as an output of the engine in response to an operation of the driver of the vehicle, wherein
the control device is configured to, when the required driving force commanded by the required driving force command unit is lower than a predetermined actual acceleration lower limit, and when the drive wheel brake is operating, cause the clutch actuator to change the state of the clutch from the connection state when the rotation speed of the engine falls below the second speed reference that is higher than the first speed reference used when the drive wheel brake is not operating and that differs depending on the required driving force.

The required driving force command unit commands a required driving force required as an output of the engine in response to an operation of the driver. When the driver operates a brake operator in a special environment such as a race, the driver may erroneously operate the required driving force command unit. According to (3), when the drive wheel brake operates, and the required driving force commanded from the required driving force command unit is lower than the predetermined actual acceleration lower limit, the state of the clutch is changed from the connection state using the second speed reference. On the other hand, for example, when the required driving force is higher than the predetermined actual acceleration lower limit, even if the drive wheel brake is operating, the state of the clutch is changed from the connection state when the rotation speed of the engine falls below the first speed reference. According to (3), a stall is prevented even if the driver erroneously operates the required driving force command unit when operating the brake operator in a special environment such as a race.

According to one aspect of the present teaching, the vehicle can employ the following configuration.

(4) The vehicle according to (3), wherein
the control device is configured to, after causing the clutch actuator to change the state of the clutch to the half-connection state that is between the connection state and the disconnection state, cause the clutch actuator to maintain the half-connection state until the rotation speed of the engine falls below the first speed reference or the required driving force increases.

According to (4), the half-connection state of the clutch is maintained, which allows a quick response to be made to a subsequent command to increase the required driving force from the required driving force command unit so that the driving force of the engine can be transmitted to the drive wheel, while preventing a stall of the engine due to locking of the drive wheel.

According to one aspect of the present teaching, the vehicle can employ the following configuration.

(5) The vehicle according to (3) or (4), wherein
the control device is configured to, after causing the clutch actuator to change the state of the clutch from the connection state when the rotation speed falls below the second speed reference that is higher than the first speed reference used when the drive wheel brake is not operating, when the required driving force commanded by the required driving force command unit increases, cause the clutch actuator to increase a transmission torque of the clutch in accordance with an amount of increase in the required driving force.

According to (5), when the rider performs an accelerating operation on the required driving force command unit for the purpose of accelerating the vehicle, the driving force of the engine can be transmitted to the drive wheel in a short time.

The transmission torque of the clutch is also referred to as the clutch capacity, for example. Increasing the transmission torque of the clutch in accordance with an increase in the required driving force is, for example, changing the state of the clutch to a half-clutch state, which is a state between the half-connection state and the connection state, when the amount of increase in the required driving force is large, and the driving force output from the engine is so large that the clutch slips. This can increase the rotation speed of the drive wheel while slowing down the increase in the driving force received by the drive wheel. In addition, increasing the transmission torque of the clutch in accordance with an increase in the required driving force is, for example, changing the state of the clutch to the connection state when the amount of increase in the required driving force is small, and the clutch does not slip. This allows the driving force output from the engine to be transmitted to the drive wheel without being lost by the clutch, and allows the rotation speed of the drive wheel to increase with high driving efficiency.

The terminology used herein is for defining particular embodiments only and is not intended to limit the teaching. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. As used herein, the terms "attached," "connected," "coupled" and/or equivalents thereof are used in a broad sense, and include both direct and indirect attachment, connection, and coupling. In addition, "connected" and "coupled" are not limited to physical or mechanical connections or couplings, and may include direct or indirect electrical connections or couplings. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

This Description describes a novel vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The vehicle is, for example, a straddled vehicle. The straddled vehicle refers to a type of vehicle in which a driver strides a saddle when seated. The straddled vehicle is, for example, a leaning vehicle. However, the vehicle is not specifically limited, and may be, for example, a four-wheel vehicle having a vehicle cabin.

The leaning vehicle is a straddled vehicle configured to be capable of turning in a leaning position. The straddle vehicle refers to a type of vehicle in which a driver strides a saddle when seated. The leaning vehicle is configured to turn in a position tilting toward the center direction of a curve. Thus, the vehicle configured to be capable of turning in a leaning position counteracts the centrifugal force applied to the vehicle during turning. Examples of the leaning vehicle include an off-road type motorcycle. The leaning vehicle is not specifically limited, and may be, for example, an on-road type, a scooter type, or a moped type, or may be a three-wheeled motorcycle. Since agility is required in the leaning vehicle, running responsiveness to a start operation is regarded as important. In the leaning vehicle, for example, a torque converter that utilizes the dynamic action of fluid is not provided in a power transmission path from a power source to a propulsion device.

Operation of the engine means that the engine outputs a driving force generated by combustion as a torque and a rotation speed of a crankshaft.

The drive wheel brake brakes the drive wheel. However, the drive wheel brake is not specifically limited, and may include, for example, a function of braking the front wheel other than the drive wheel. In addition, the vehicle may include, for example, a brake for braking the front wheel independently of the drive wheel brake. The drive wheel brake is operated by the operation of a lever or a pedal by the driver. However, the drive wheel brake is not specifically limited, and may be operated, for example, by the control of the control device that executes auto cruise control.

The state of the clutch is changed between the connection state and the disconnection state. The state of the clutch also includes an intermediate state between the connection state and the disconnection state. Changing the state of the clutch from the connection state includes changing the state to the disconnection state or the intermediate state. Output of the clutch actuator changes the state of the clutch without driving the shift operation of a dog transmission.

The control device is composed of, for example, a computer including a central processing unit (CPU) that executes a program and a memory that stores the program. However, the control device is not specifically limited, and may be composed of an electronic circuit that does not execute a program.

It can be determined that the rotation speed of the engine falls below the first speed reference, which is a condition for operation of the control device, by, for example, directly detecting the rotation speed of the engine. However, the location where the rotation speed is detected for determination of the condition is not specifically limited, and may be a portion that rotates in synchronization with the engine, such as the clutch, the transmission, or the drive wheel, for example.

The half-connection state of the clutch is a state that is between the connection state and the disconnection state. More specifically, the half-connection state is a state closer to the disconnection state than the half-clutch state where the clutch slips while transmitting the driving force at the time of start or an increase in the engine torque. The half-connection state is a state where the driving force of the engine is transmitted when the engine brake is applied, and when a force for stopping the engine is applied from the drive wheel during the operation of the engine, the transmission of the force is prevented by slipping. For example, when the force for stopping the engine is applied from the drive wheel by operation of the brake, the clutch in the half-connection state releases the force by slipping. If the clutch is brought into the half-clutch state during the operation of the engine brake, for example, the clutch slips even when a force higher than the force for stopping the engine is applied from the drive wheel.

The half-clutch state is not a state at one point between the connection state and the disconnection state, but has a certain range. The half-connection state is also not a state at one point between the half-clutch state and the disconnection state, but has a certain range.

The required driving force command unit that commands a required driving force is, for example, an accelerator operator operated by the driver. The required driving force command unit is not specifically limited, and may be, for example, a throttle valve. The control device commands a required driving force as an output of a sensor provided in, for example, the accelerator operator or the throttle valve. Alternatively, the required driving force command unit may, for example, receive output from the control device that executes cruise control. The actual acceleration lower limit of the required driving force is, for example, a lower limit of a range that does not include a required driving force generated as a result of erroneous contact with the operator. The actual acceleration lower limit is set, for example, between a minimum value and a median value of a range operable by the required driving force command unit.

### Advantageous Effects of Invention

According to the present teaching, it is possible to provide a vehicle that can prevent an engine stall due to locking of a drive wheel, while preventing a decrease in an effective period of an engine brake.

### Brief Description of Drawings

[FIG. 1] A side view showing a schematic configuration of a vehicle according to a first embodiment.
[FIG. 2] A flowchart illustrating clutch control operation by the control device shown in FIG. 1.
[FIG. 3] Time charts showing one example of the clutch control operation by the control device shown in FIG. 1.
[FIG. 4] A flowchart illustrating the operation of the control device according to a second embodiment.
[FIG. 5] A flowchart illustrating the operation of the control device according to a third embodiment.
[FIG. 6] A time chart showing one example of the clutch control operation according to the third embodiment.

### Description of Embodiments

Embodiments of the present teaching will be described below with reference to the drawings.

### [First Embodiment]

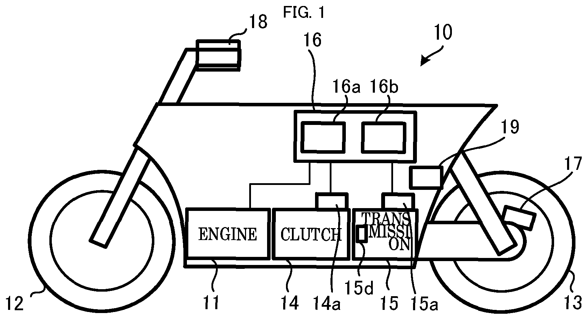

FIG. 1 is a side view showing a schematic configuration of a vehicle according to a first embodiment. FIG. 1 shows a leaning vehicle as an example of a vehicle 10.

The vehicle 10 shown in FIG. 1 includes an engine 11, a drive wheel 13, a drive wheel brake 17, a clutch 14, and a control device 16. The vehicle 10 also includes a front wheel 12, a dog transmission 15 (transmission), and a required driving force command unit 18.

The engine 11 outputs a driving force.

The drive wheel 13 is a rear wheel. The drive wheel 13 rotates by receiving the driving force of the engine 11.

The drive wheel brake 17 brakes the drive wheel 13. The drive wheel brake 17 operates in response to a driver's operation. The drive wheel brake 17 may include a function of braking the front wheel 12 in addition to the drive wheel, for example. The vehicle 10 may also include, for example, a brake for braking the front wheel 12 independently of the drive wheel brake 17. The vehicle 10 also includes an anti-lock braking system 19. The anti-lock braking system 19 is a system that performs control to prevent locking of the drive wheel 13 during operation of the drive wheel brake 17. For example, during the operation of the drive wheel brake 17, the anti-lock braking system 19 detects locking using a speed difference between the front wheel 12 and the drive wheel 13 or a result of inertia measurement, and reduces the operating force of the drive wheel brake 17 in response to the locking. The anti-lock braking system 19 switches between execution and non-execution of the control to prevent locking of the drive wheel 13 during the operation of the drive wheel brake 17, in response to a switching operation by the driver.

The clutch 14 has a clutch actuator 14a. The clutch 14 changes the state of the driving force between a connection state and a disconnection state by driving of the clutch actuator 14a. In the clutch 14, a clutch plate (not shown) is displaced between a position corresponding to the connection state and a position corresponding to the disconnection state. The clutch 14 has a half-clutch state and a half-connection state between the connection state and the disconnection state. The half-connection state is a state between the half-clutch state and the disconnection state. That is, the half-clutch state is a state between the half-connection state and the connection state. That is, the state of the clutch 14 changes from the connection state to the half-clutch state, the half-connection state, and the disconnection state in this order. The clutch capacity in the half-clutch state is a capacity that can transmit the driving force from the engine 11, which increases when the vehicle 10 is started, to the drive wheel 13. The clutch capacity in the half-clutch state can also transmit the force of the engine brake to the drive wheel 13. The clutch capacity in the half-connection state is a capacity that can transmit the force of the engine brake to the drive wheel 13, but cannot transmit the driving force of the engine 11 that increases at the time of start.

The dog transmission 15 performs switching of a gear stage. The dog transmission 15 shifts up by disengaging and engaging a dog 15d. The dog transmission 15 also shifts down by disengaging and engaging the dog 15d. The dog transmission 15 transmits the driving force of the engine 11 as a transmission driving force to the drive wheel 13 via the engaged dog 15d.

The required driving force command unit 18 is, for example, an accelerator operator. The required driving force command unit 18 commands a required driving force required as an output of the engine 11 in response to an operation of the driver.

The control device 16 controls the engine 11 and the clutch actuator 14a.

The control device 16 is composed of a computer including a central processing unit (CPU) 16a that executes a program and a memory 16b that stores the program. The central processing unit 16a controls the engine 11 and the clutch actuator 14a by reading and executing the program stored in the memory 16b.

The control device 16 controls the engine 11 and the clutch actuator 14a. For example, the control device 16 controls the clutch actuator 14a based on the rotation speed of the engine 11 and the state of the drive wheel brake 17.

In addition, the control device 16 causes a shift actuator 15a to shift up or down the dog transmission 15 in accordance with at least the rotation speed of the engine 11. Thus, the gear stage is automatically switched without depending on the driver's operation. More specifically, the control device 16 causes the shift actuator 15a to shift up the dog transmission 15 based on a shift map that associates at least rotation speeds of the engine 11 with gear stages. Output of the shift actuator 15a drives the operation of the dog transmission 15 without driving the operation of the clutch 14.

Alternatively, the control device 16 can cause the dog transmission 15 to shift up or down in response to, for example, the driver's operation. For example, the control device 16 causes the shift actuator 15a to shift up or down the dog transmission 15 in response to the operation of a shift switch by the driver.

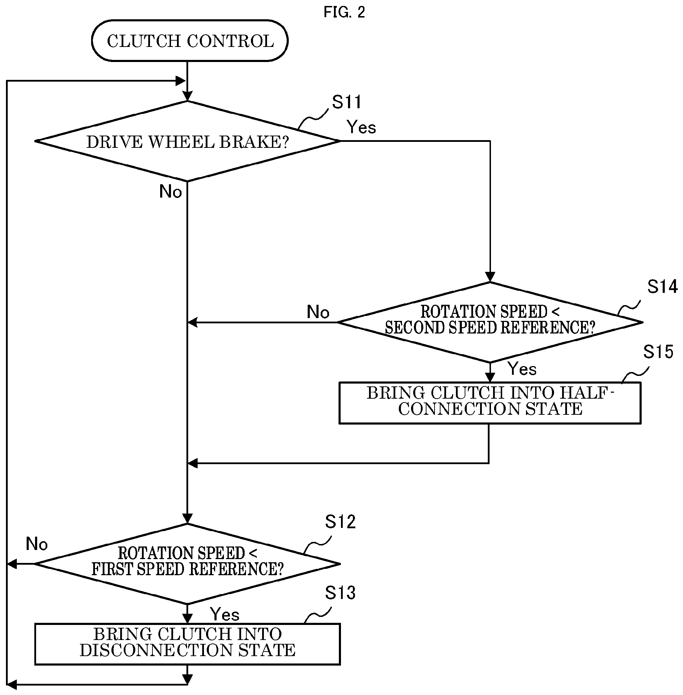

FIG. 2 is a flowchart illustrating clutch control operation by the control device shown in FIG. 1.

FIG. 2 shows clutch control operation particularly when the rotation speed of the drive wheel 13 decreases toward zero.

If the clutch 14 is in the connection state and the drive wheel brake 17 is not operating (No in S11), and if the rotation speed of the engine 11 falls below a first speed reference (Yes in S12), the control device 16 causes the clutch actuator 14a to change the state of the clutch 14 from the connection state to the disconnection state (S13).

On the other hand, if the clutch 14 is in the connection state and the drive wheel brake 17 is operating (Yes in S11), and if the rotation speed of the engine 11 falls below a second speed reference, the control device 16 causes the clutch actuator 14a to change the state of the clutch 14 from the connection state toward the half-connection state. Here, the second speed reference used when the drive wheel brake 17 is operating is higher than the first speed reference used when the drive wheel brake 17 is not operating.

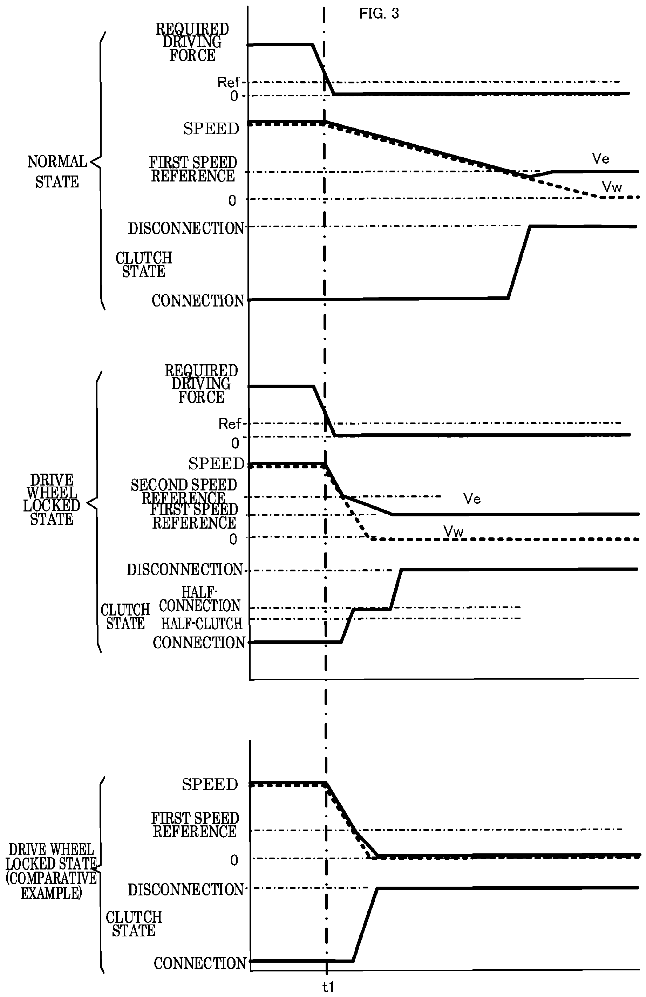

FIG. 3 shows time charts showing one example of the clutch control operation by the control device shown in FIG. 1.

The time charts in FIG. 3 show the operation state of each part when the rotation speed of the drive wheel 13 of the vehicle 10 of the present embodiment decreases toward zero, for each of a normal state where the drive wheel 13 is not locked and a state where the drive wheel 13 is locked. More specifically, the required driving force, the speed of the drive wheel, the engine speed, and the state of the clutch 14 are shown. The speed of the drive wheel 13, which has been converted to the rotation speed of the engine for easy understanding of its relationship with the engine speed, is indicated by the broken lines.

The time charts in FIG. 3 also show, as a comparative example of the present embodiment, the operation of each part when the control of the present embodiment is not performed in a locked state of the drive wheel.

In the normal state, for example, the required driving force commanded by the required driving force command unit 18 substantially disappears, and the driving force output from the engine 11 decreases, which causes rotation speed Ve of the engine 11 to decrease from timing t1. In the normal state, the drive wheel 13 is not locked. Thus, rotation speed Vw of the drive wheel 13 reflects the traveling speed of the vehicle 10. The traveling vehicle 10 has inertia. The inertia of the vehicle 10 significantly affects the traveling speed of the vehicle 10. The rotation speed Vw of the drive wheel 13 decreases relatively slowly as the traveling speed of the vehicle 10 decreases. As the rotation speed Vw of the drive wheel 13 decreases, the rotation speed Ve of the engine 11 also decreases relatively slowly.

The control device 16 causes the clutch actuator 14a to change the state of the clutch 14 from the connection state to the disconnection state when the rotation speed of the engine 11 falls below the first speed reference. The first speed reference is set to be equal to or higher than an idling rotation speed of the engine 11.

Change of the state of the clutch 14 is performed by operating the clutch actuator 14a and displacing the position of a clutch plate of the clutch 14. Therefore, a time is required to change the state of the clutch 14. Thus, the rotation speed Ve of the engine 11 continues to decrease with the rotation speed Vw of the drive wheel 13 until the clutch 14 enters the disconnection state, even after the rotation speed of the engine 11 falls below the first speed reference. However, since the decrease in the rotation speed Vw of the drive wheel 13 is slow in the normal state, the decrease in the rotation speed Ve of the engine 11 after the rotation speed Ve of the engine 11 falls below the first speed reference is small.

After the clutch 14 enters the disconnection state, the rotation speed Vw of the drive wheel 13 continues to decrease and eventually reaches zero. At this moment, the vehicle 10 stops traveling. After the clutch 14 enters the disconnection state, the rotation speed Ve of the engine 11 recovers to the idling rotation speed. As a result, the occurrence of a stall of the engine 11 can be prevented.

In the normal state, the decrease in the rotation speed Ve of the engine 11 after the rotation speed Ve of the engine 11 falls below the first speed reference is small.

In the drive wheel locked state, for example, the required driving force commanded by the required driving force command unit 18 substantially disappears and the driving force output from the engine 11 decreases, and additionally, the drive wheel brake 17 operates, which causes the rotation speed Ve of the engine 11 to decrease from timing t1. Locking of the drive wheel 13 occurs when the drive wheel brake 17 operates while the vehicle 10 is traveling, and the resisting force of the drive wheel brake 17 against the rotation of the drive wheel 13 exceeds the frictional force between the drive wheel 13 and the road surface. Therefore, the rotation speed Vw of the drive wheel 13 decreases rapidly as compared to the traveling speed of the vehicle 10. As the rotation speed Vw of the drive wheel 13 decreases, the rotation speed Ve of the engine 11 also decreases relatively rapidly.

In the present embodiment, when the drive wheel brake 17 is operating, and when the rotation speed Ve of the engine 11 falls below the second speed reference, the control device 16 causes the clutch actuator 14a to change the state of the clutch 14 from the connection state to the half-connection state. The second speed reference is set to a value higher than the first speed reference used when the drive wheel brake 17 is not operating. As described above, a time is required to change the state of the clutch 14. During the time of this change, the rotation speed Ve of the engine 11 continues to decrease with the rotation speed Vw of the drive wheel 13.

In the present embodiment, the second speed reference is higher than the first speed reference used when the drive wheel brake 17 is not operating. Thus, the state of the clutch 14 changes, for example, when the rotation speed Ve of the engine 11 is higher than that in the normal state. That is, the connection state of the clutch 14 is released in a shorter time than when the drive wheel brake 17 is not operating. Therefore, for example, the rotation speed Ve of the engine 11 can escape from the influence of the decrease in the rotation speed Vw of the drive wheel 13 in a shorter time than in the normal state, so that the amount of decrease in the rotation speed Ve is reduced. As a result, after the clutch 14 is brought into the half-connection state, the rotation speed Ve of the engine 11 recovers to the idling rotation speed. As a result, the occurrence of a stall of the engine 11 can be prevented.

As shown in the comparative example, in the case where the control described above is not performed in a locked state of the drive wheel, that is, where the control for making a determination based on the second speed reference is not performed, the control device 16 causes the clutch actuator 14a to change the state of the clutch 14 from the connection state to the disconnection state when the rotation speed of the engine 11 falls below the first speed reference. However, a time is required to change the state of the clutch 14. During this time, the rotation speed Ve of the engine 11, which rapidly decreases due to the locking, falls significantly below the idling speed. As a result, the engine 11 is likely to stall.

In contrast, in the present embodiment, when the drive wheel brake 17 is operating, the state of the clutch 14 changes from the connection state when the rotation speed Ve of the engine 11 falls below the second speed reference that is higher than the first speed reference used in the normal state. Thus, the occurrence of a stall of the engine 11 can be prevented even if the drive wheel 13 is locked by the operation of the drive wheel brake 17.

In addition, in the present embodiment, when the drive wheel brake 17 is not operating, the state of the clutch 14 changes from the connection state when the rotation speed Ve of the engine 11 falls below the lower first speed reference. This can make the engine brake effective for a long period of time until the rotation speed of the engine 11 decreases to around the idling speed.

Therefore, according to the present embodiment, it is possible to prevent a stall of the engine 11 due to locking of the drive wheel 13, while preventing a decrease in the effective period of the engine brake.

In addition, in the present embodiment, when the drive wheel brake 17 is operating, the state of the clutch 14 changes to the half-connection state when the rotation speed Ve of the engine 11 falls below the second speed reference. The half-connection state is a state between the half-clutch state, which is a state when the vehicle 10 is started, and the disconnection state. The clutch capacity in the half-connection state is a capacity that can transmit the force of the engine brake to the drive wheel 13, but cannot transmit the driving force of the engine 11 that increases at the time of start. Thus, even when the drive wheel brake 17 is operating but the drive wheel 13 is not locked and when the rotation speed Ve of the engine 11 decreases relatively slowly, the engine brake can be exerted even after the state of the clutch 14 has changed from the connection state.

### [Second Embodiment]

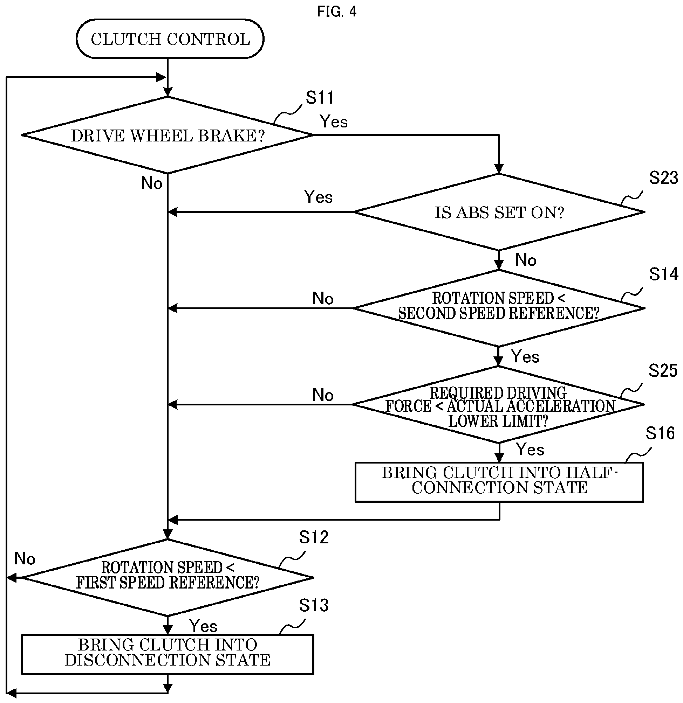

FIG. 4 is a flowchart illustrating the operation of the control device according to a second embodiment.

The operation of the control device 16 according to the present embodiment includes additional steps S23 and S25 in the operation of the first embodiment shown in FIG. 2. The operation is otherwise the same as that in the first embodiment. Therefore, common elements and operations are denoted by the same reference numerals, and redundant description is omitted.

Even if the drive wheel brake 17 is operating (Yes in S11), if the control to prevent locking by the anti-lock braking system 19 is being executed (Yes in S23), the control device 16 causes the clutch actuator 14a to change the state of the clutch 14 from the connection state toward the disconnection state when the rotation speed of the engine 11 falls below the first speed reference. On the other hand, if the drive wheel brake 17 is operating (Yes in S11), and the control to prevent locking by the anti-lock braking system 19 is not being executed (No in S23), when the rotation speed of the engine 11 falls below the second speed reference (Yes in S14), the control device 16 causes the clutch actuator 14a to change the state of the clutch 14 from the connection state to the half-connection state (S16).

When the control to prevent locking by the anti-lock braking system 19 is being executed, locking of the drive wheel 13 is prevented even if the drive wheel brake 17 operates. In the present embodiment, when the control to prevent locking by the anti-lock braking system 19 is being executed (Yes in S23), change of the transmission state of the clutch 14 starts at the first speed reference that is lower than the second speed reference. Thus, even if the drive wheel brake 17 is operating (Yes in S11), the state of the clutch is prevented from changing between the second speed reference and the first speed reference of the rotation speed of the engine 11. That is, the frequency of unnecessary operations of the clutch 14 is reduced in a situation where the locking is prevented by the anti-lock braking system 19. This can reduce power consumption by the operation of the clutch actuator 14a and wear of the clutch 14.

On the other hand, if the control to prevent locking by the anti-lock braking system 19 is not being executed, the drive wheel 13 may be locked by the operation of the drive wheel brake 17. In the present embodiment, if the control to prevent locking by the anti-lock braking system 19 is not being executed (No in S23), the change of the transmission state of the clutch 14 starts at the second speed reference that is higher than the first speed reference. This can prevent a stall of the engine 11 due to locking of the drive wheel 13.

In addition, if the drive wheel brake 17 is operating (Yes in S11), and the rotation speed of the engine 11 falls below the second speed reference (Yes in S14), the control device 16 according to the present embodiment determines whether the required driving force is lower than a predetermined actual acceleration lower limit (Ref in FIG. 3) (S25). If the required driving force is lower than the actual acceleration lower limit (Yes in S25), the control device 16 causes the clutch actuator 14a to change the state of the clutch 14 from the connection state to the half-connection state (S16).

If the required driving force is not lower than the actual acceleration lower limit (No in S25), the control device 16 causes the clutch actuator 14a to change the state of the clutch 14 from the connection state toward the disconnection state when the rotation speed of the engine 11 falls below the first speed reference.

For example, when the driver operates a brake operator in a special environment such as a race, the driver may erroneously operate the required driving force command unit 18. For example, when the vehicle 10 is a leaning vehicle, the driver may operate an accelerator grip serving as the required driving force command unit 18 when gripping a brake lever serving as the brake operator. In the case of such erroneous operation, it is highly likely that the required driving force output from the required driving force command unit 18 is lower than the actual acceleration lower limit (Ref in FIG. 3), that is, the lower limit of the range in which the vehicle 10 is actually accelerated.

In the present embodiment, if the drive wheel brake 17 operates, and the required driving force commanded by the required driving force command unit 18 is lower than the actual acceleration lower limit (Ref in FIG. 3), the control device 16 changes the state of the clutch 14 to the half-connection state using the second speed reference, as in the case where the required driving force is zero. Thus, a stall of the engine 11 is prevented even if the driver erroneously operates the required driving force command unit 18 when operating the brake operator in a special environment such as a race.

Although the operation in which both steps S23 and S25 are added has been described as the present embodiment, the present embodiment is not limited thereto, and may be, for example, operation in which either Step S23 or S25 is added.

### [Third Embodiment]

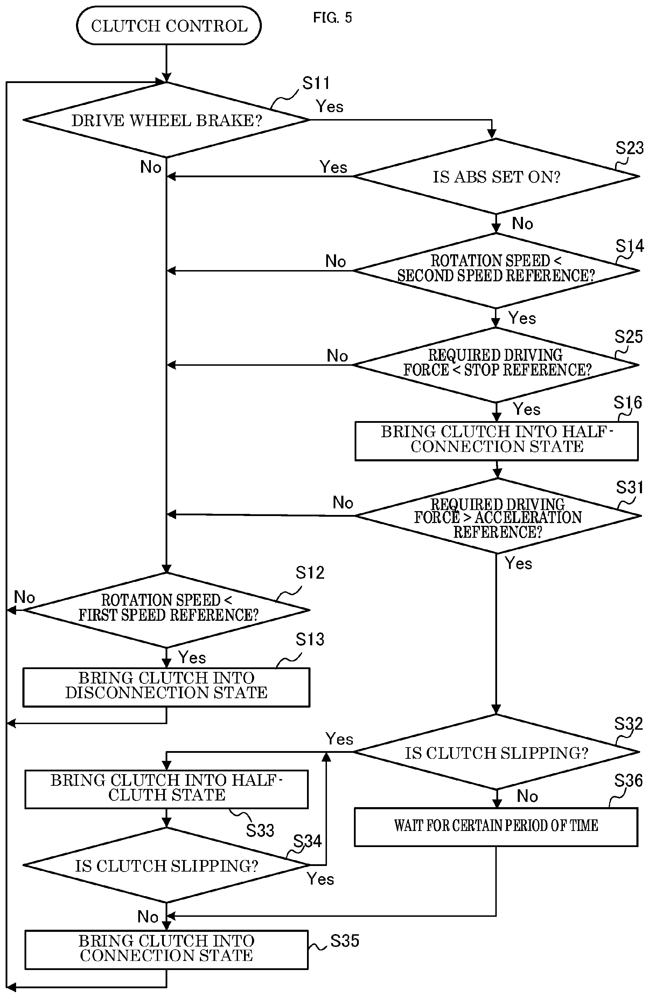

FIG. 5 is a flowchart illustrating the operation of the control device according to a third embodiment.

The operation of the control device 16 according to the present embodiment includes additional steps S31 to S35 in the operation of the second embodiment shown in FIG. 4. The operation is otherwise the same as that in the second embodiment. Therefore, common elements and operations are denoted by the same reference numerals, and redundant description is omitted.

After causing the clutch actuator 14a to change the state of the clutch 14 from the connection state to the half-connection state in step 16 described above, the control device 16 causes the half-connection state to be maintained (S16) until the required driving force increases (Yes in S31) or the rotation speed of the engine 11 falls below the first speed reference (Yes in S12). That is, if the required driving force does not increase (No in S31), and the rotation speed of the engine 11 does not fall below the first speed reference (No in S12), the control device 16 causes the half-connection state to be maintained (S16).

If the rotation speed of the engine 11 falls below the first speed reference (Yes in S12), the control device 16 changes the state of the clutch 14 to the disconnection state (S13).

More specifically, the determination in step S31 as to whether the required driving force increases is made, for example, based on whether the required driving force exceeds the actual acceleration lower limit Ref (FIG. 3). For example, when the driver operates the required driving force command unit 18 for acceleration to increase the required driving force (Yes in S31), the driving force output from the engine 11 increases in accordance with the increase in the required driving force. When the required driving force commanded by the required driving force command unit 18 increases, the control device 16 causes the clutch actuator 14a to increase a transmission torque of the clutch 14 in accordance with an amount of increase in the required driving force.

If the clutch 14 is slipping (Yes in S32), the control device 16 causes the clutch actuator 14a to change the state of the clutch 14 from the half-connection state to the half-clutch state (S33). While the clutch 14 is slipping (Yes in S34), the control device 16 maintains the clutch 14 in the half-clutch state (S33). If the slip of the clutch 14 has disappeared (No in S34), the control device 16 changes the state of the clutch 14 to the connection state (S35). The slip of the clutch 14 is detected, for example, as a difference between an estimated speed of the engine 11 calculated from the rotation speed of the drive wheel 13 and the current gear stage, and an actual rotation speed of the engine 11.

In the present embodiment, the half-connection state of the clutch 14 is maintained, which allows a stall of the engine 11 due to locking of the drive wheel 13 to be prevented, while subsequently allowing a response to the command to increase the required driving force to be made in a short time by the operation from steps S32 to S34 so that the driving force of the engine 11 can be transmitted to the drive wheel 13.

If the clutch 14 is not slipping (No in S32), the control device 16 waits for a certain period of time (S36), and then changes the state of the clutch 14 to the connection state (S35).

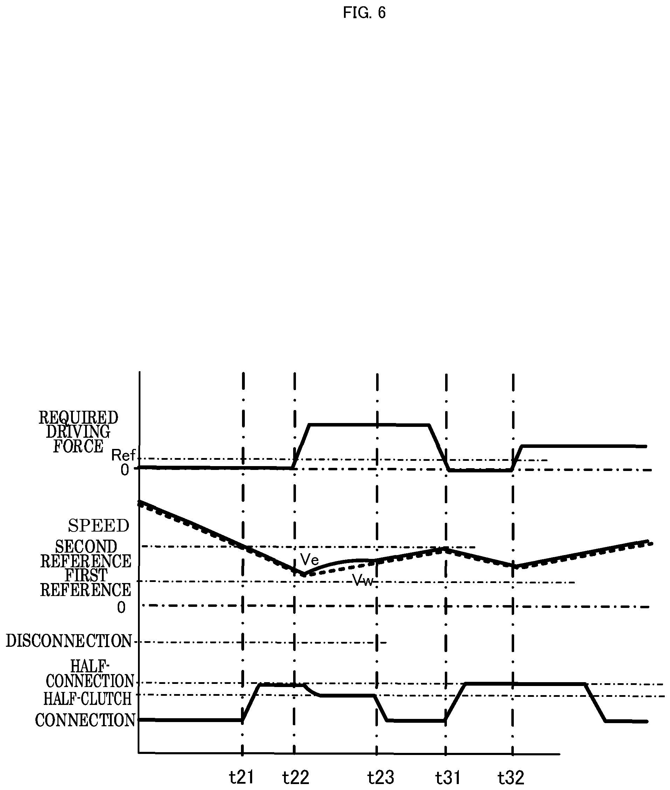

FIG. 6 shows a time chart showing one example of the clutch control operation according to the third embodiment.

In the operation shown in FIG. 6, with a decrease in the required driving force, the rotation speed of the engine 11 falls below the second reference at timing t21, which brings the state of the clutch 14 into the half-connection state.

When the required driving force increases at timing t22, the rotation speed Ve increases with an increase in the driving force of the engine 11. The clutch 14 is slipping, and the rotation speed Ve of the engine 11 is higher than the rotation speed Vw of the drive wheel 13, which is, more specifically, the value obtained by converting the rotation speed Vw to the speed of the engine 11. If the clutch 14 is slipping (Yes in S32 in FIG. 5), the control device 16 causes the clutch actuator 14a to change the state of the clutch 14 from the half-connection state to the half-clutch state (S33 in FIG. 5). This increases the clutch capacity, so that the rotation speed Vw of the drive wheel 13 matches the rotation speed Ve of the engine 11 at subsequent timing t23. If the slip of the clutch 14 disappears, the control device 16 changes the state of the clutch 14 to the connection state.

As the required driving force subsequently decreases again, the rotation speed of the engine 11 falls below the second reference at timing t31, which brings the state of the clutch 14 into the half-connection state. When the required driving force increases at timing t32, the rotation speed Ve increases with an increase in the driving force of the engine 11. This time, the required driving force is low, so that the clutch 14 does not slip. In this case, the control device 16 changes the state of the clutch 14 to the connection state after waiting for a certain period of time.

In this manner, a response to the command to increase the required driving force can be made in a short time so that the driving force of the engine 11 can be transmitted to the drive wheel 13.

### Reference Signs List

10: vehicle
11: engine
13: drive wheel
14: clutch
14a: clutch actuator
16: control device
17: drive wheel brake
18: required driving force command unit
19: anti-lock braking system
Ref: actual acceleration lower limit
Ve: rotation speed
Vw: rotation speed

## Claims

1. A vehicle (10) comprising:
an engine (11) that is configured to output a driving force;
a drive wheel (13) that is configured to rotate by receiving the driving force of the engine (11);
a drive wheel brake (17) that is configured to brake the drive wheel (13);
a clutch (14) that is provided between the engine (11) and the drive wheel (13) and includes a clutch actuator (14a), the clutch (14) being configured to change a state thereof by driving of the clutch actuator (14a); and
a control device (16) that is configured to control the engine (11) and the clutch actuator (14a),
the control device (16) being configured to:
when the state of the clutch (14) is a connection state and the drive wheel brake (17) is not operating, cause the clutch actuator (14a) to change the state of the clutch (14) from the connection state toward a disconnection state when a rotation speed of the engine (11) falls below a first speed reference; and
when the state of the clutch (14) is the connection state and the drive wheel brake (17) is operating, cause the clutch actuator (14a) to change the state of the clutch (14) to a half-connection state that is between the connection state and the disconnection state when the rotation speed of the engine (11) falls below a second speed reference that is higher than the first speed reference used when the drive wheel brake (17) is not operating.

2. The vehicle (10) according to claim 1,
further comprising an anti-lock braking system (19) that is configured to switch between execution and non-execution of control to prevent locking of the drive wheel (13) during operation of the drive wheel brake (17), in response to a switching operation by a driver of the vehicle (10), wherein
the control device (16) is configured to:
when the control to prevent locking by the anti-lock braking system (19) is being executed, and when the drive wheel brake (17) is operating, cause the clutch actuator (14a) to change the state of the clutch (14) from the connection state toward the disconnection state when the rotation speed of the engine (11) falls below the first speed reference; and
when the control to prevent locking by the anti-lock braking system (19) is not being executed, and when the drive wheel brake (17) is operating, cause the clutch actuator (14a) to change the state of the clutch (14) to the half-connection state when the rotation speed of the engine (11) falls below the second speed reference that is higher than the first speed reference used when the drive wheel brake (17) is not operating.

3. The vehicle (10) according to claim 1 or 2,
further comprising a required driving force command unit (18) that is configured to command a required driving force required as an output of the engine (11) in response to an operation of the driver of the vehicle (10), wherein
the control device (16) is configured to, when the required driving force commanded by the required driving force command unit (18) is lower than a predetermined actual acceleration lower limit, and when the drive wheel brake (17) is operating, cause the clutch actuator (14a) to change the state of the clutch (14) from the connection state to the half-connection state when the rotation speed of the engine (11) falls below the second speed reference that is higher than the first speed reference used when the drive wheel brake (17) is not operating and that differs depending on the required driving force.

4. The vehicle (10) according to claim 3, wherein
the control device (16) is configured to, after causing the clutch actuator (14a) to change the state of the clutch (14) to the half-connection state, cause the clutch actuator (14a) to maintain the half-connection state until the rotation speed of the engine (11) falls below the first speed reference or the required driving force increases.

5. The vehicle (10) according to claim 3 or 4, wherein
the control device (16) is configured to, after causing the clutch actuator (14a) to change the state of the clutch (14) from the connection state toward the disconnection state when the rotation speed falls below the second speed reference that is higher than the first speed reference used when the drive wheel brake (17) is not operating, when the required driving force commanded by the required driving force command unit increases, cause the clutch actuator (14a) to increase a transmission torque of the clutch (14) in accordance with an amount of increase in the required driving force.
